# EUROPÄISCHE PATENTSCHRIFT

(11) **EP 3 774 485 B1**
(45) Veröffentlichungstag und Bekanntmachung des Hinweises auf die Patenterteilung: **26.01.2022**
(21) Anmeldenummer: 18785864.2
(22) Anmeldetag: 27.09.2018
(51) Int. Cl.: B60B 17/00, B61K 9/08, B61L 15/00, B61C 15/10, B61L 23/04, B60B 39/02

(54) **STEUERBARE GLEISKONDITIONIEREINHEIT**
CONTROLLABLE TRACK CONDITIONING UNIT
UNITÉ COMMANDABLE DE CONDITIONNEMENT DE VOIE FERRÉE

(30) Priorität: 17.05.2018 DE 102018207751
(43) Veröffentlichungstag der Anmeldung: 17.02.2021
(73) Patentinhaber: Siemens Mobility GmbH, 81739 München (DE)
(72) Erfinder: FEGE, Alexander, 86157 Augsburg (DE); MEYER, Heiko, 80339 München (DE); ROSSIG, Kilian, 81247 München (DE)
(86) Internationale Anmeldenummer: PCT/EP2018/076315
(87) Internationale Veröffentlichungsnummer: WO 2019/219223

(56) Entgegenhaltungen:
- WO-A1-2015/044245
- WO-A1-2015/044246
- WO-A1-2017/070677

## Beschreibung

Die Erfindung betrifft eine Gleiskonditioniereinheit-Justageeinrichtung. Weiterhin betrifft die Erfindung ein Schienenfahrzeug. Überdies betrifft die Erfindung ein Verfahren zum Justieren einer Gleiskonditioniereinheit.

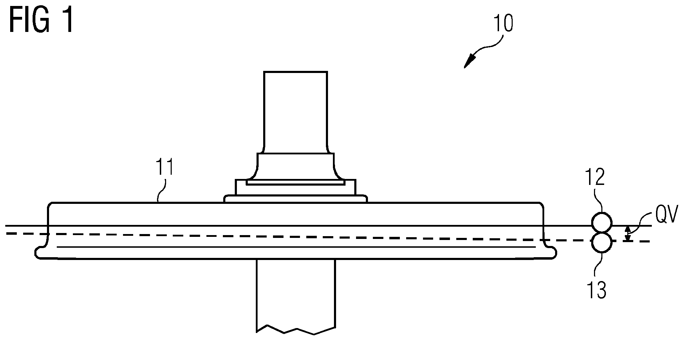

Der Kontakt zwischen dem Rad eines Schienenfahrzeugs und den befahrenen Schienen, und damit auch der Kraftschlussbeiwert, wird durch äußere Bedingungen, wie zum Beispiel Nässe, Schmutz oder ähnliches, stark beeinflusst. Um einen Kraftschlussbeiwert zwischen einem Rad eines Schienenfahrzeugs und den befahrenen Schienen zu erhöhen, wird eine Gleiskonditioniereinheit verwendet. Die Kraftschlussbeiwerterhöhung kann durch mechanisches Putzen oder durch Aufbringen eines oder mehrerer Hilfsmedien, wie zum Beispiel Sand, Wasser oder Luft, auf die Schiene oder eine Kombination aus den beiden Methoden erreicht werden. Die Gleiskonditioniereinheit kann am Wagenkasten oder am Drehgestell des betreffenden Schienenfahrzeugs angeordnet werden und wirkt direkt und punktuell auf die befahrene Schiene. Der Verlauf einer Gleistrasse, wie zum Beispiel das Auftreten von Bögen oder eine Spurkanalerweiterung, und unterschiedliche Fahrzustände können aufgrund eines Querversatzes relativ zu den Schienen zu einer nichtidealen Stellung der Gleiskonditioniereinheit führen. Ein Beispiel für eine solche Fehlstellung ist in FIG 1 gezeigt. Die Höhe des Wertes des Querversatzes hängt ab von der Einbauposition der Gleiskonditioniereinheit am Wagenkasten oder an dem Drehgestell eines Schienenfahrzeugs. Infolge des Querversatzes kann es passieren, dass die Schiene nicht mehr vom Wirkbereich der Gleiskonditioniereinheit abgedeckt wird, da die Gleiskonditioniereinheit nur punktuell wirkt. D.h., die Gleiskonditioniereinheit kann aufgrund der Querauslenkung relativ zur Schiene nicht mehr optimal oder gar nicht wirken, da der Wirkbereich neben der Schiene liegt. Dadurch wird der kraftschlussbeiwerterhöhende Effekt reduziert oder geht ganz verloren.

Ordnet man die Gleiskonditioniereinheit bezogen auf die Fahrzeuglängsrichtung nahe am Drehpunkt des Drehgestells an, so kann der Querversatz in Gleisbögen verringert werden. Bei einer Spurkanalerweiterung ergibt eine drehpunktnahe Anordnung der Gleiskonditioniereinheit allerdings keinen positiven Effekt. Die reduzierte Wirkung der Gleiskonditioniereinheit kann in manchen Fällen auch durch eine erhöhte Austragsmenge von Hilfsmedien, wie zum Beispiel Sand, Wasser oder Luft, kompensiert werden.

Aus der Druckschrift WO 2017/070677 A1 ist ein Traktionssystem bekannt, bei dem eine Düse mit einer Luftquelle gekoppelt ist. Die Düse ändert durch eine Nachführung ihre Zielrichtung, sie wird selektiv auf einen bestimmten Abschnitt einer Schienenoberfläche einer Schiene gerichtet.

Es besteht also die Aufgabe, eine Vorrichtung und ein Verfahren anzugeben, mit denen ein verbesserter Kraftschlussbeiwert eines Schienenfahrzeugs erreicht wird.

Diese Aufgabe wird durch eine Gleiskonditioniereinheit-Justageeinrichtung gemäß Patentanspruch 1, ein Schienenfahrzeug gemäß Patentanspruch 10 und ein Verfahren zum Justieren einer Gleiskonditioniereinheit gemäß Patentanspruch 11 gelöst.

Die erfindungsgemäße Gleiskonditioniereinheit-Justageeinrichtung weist mindestens eine Messeinheit zum Ermitteln eines Querversatzes einer von dem Schienenfahrzeug befahrenen Schiene relativ zu einem Wirkbereich einer Gleiskonditioniereinheit des Schienenfahrzeugs auf. Ein solcher Wirkbereich umfasst den Flächenabschnitt, auf den die Gleiskonditioniereinheit einwirkt. Beispielsweise trifft dabei ein Hilfsmedium der Gleiskonditioniereinheit auf einen Flächenabschnitt, welcher den Wirkbereich der Gleiskonditioniereinheit darstellt, auf.

Alternativ weist die erfindungsgemäße Gleiskonditioniereinheit-Justageeinrichtung mindestens eine Messeinheit zur Ermittlung der relativen Position zwischen mindestens einem Drehgestell und einem Wagenkasten des Schienenfahrzeugs auf. Alternativ oder zusätzlich kann also ein Querversatz auch indirekt durch Messung einer Drehung eines Drehgestells ermittelt werden. Teil der erfindungsgemäßen Gleiskonditioniereinheit-Justageeinrichtung ist auch eine Ermittlungseinheit zum Ermitteln eines Ansteuerbefehls für eine Ansteuereinheit in Abhängigkeit von dem ermittelten Querversatz und der Flächengröße des Wirkbereichs der Gleiskonditioniereinheit. Der Ansteuerbefehl erfolgt derart, dass durch einen Justagevorgang der effektive Wirkbereich, d.h. die Schnittfläche des Wirkbereichs und der Schienenfläche, vergrößert wird, um damit die Wirksamkeit der Gleiskonditioniereinheit zu verbessern.

Alternativ weist die erfindungsgemäße Gleiskonditioniereinheit-Justageeinrichtung auch eine Ermittlungseinheit zum Ermitteln eines Ansteuerbefehls in Abhängigkeit von der relativen Position zwischen dem Drehgestell und dem Wagenkasten auf. Bei dieser Variante erfolgt die Ansteuerung direkt auf Basis der Fahrwerksstellung. Der entsprechende Zusammenhang zwischen Steuerungswerten und Fahrwerksstellung kann entweder empirisch oder durch Berechnung über eine Formel gewonnen werden.

Bei beiden Varianten kann zumindest indirekt die Flächengröße des Wirkbereichs der Gleiskonditioniereinheit und/oder die Form dieser Fläche und die Breite der Lauffläche der befahrenen Schiene mitberücksichtigt werden, um einen aktuellen und einen gewünschten Kraftschlussbeiwert in Abhängigkeit von einer aktuellen bzw. einer nach einer Justage vorliegenden Schnittfläche zwischen dem Wirkbereich und der Lauffläche der befahrenen Schiene zu ermitteln.

Die erfindungsgemäße Gleiskonditioniereinheit-Justageeinrichtung weist zudem die Ansteuereinheit zum Ansteuern einer Aktuatoreinheit der Gleiskonditioniereinheit auf Basis des Ansteuerbefehls mit einem Stellbefehl auf. Überdies umfasst die Gleiskonditioniereinheit-Justageeinrichtung die Aktuatoreinheit zum Verstellen eines Wirkbereichs der Gleiskonditioniereinheit auf Basis des Stellbefehls. Vorteilhaft wird eine verbesserte Wirkung der Gleiskonditioniereinheit bei einer Änderung der Schienenführung, wie zum Beispiel in Gleisbögen oder bei einer Spurerweiterung, erreicht. Mit einem höheren Kraftschlussbeiwert ist eine höhere Bremswirkung sowie ein verbessertes Traktionsverhalten eines Schienenfahrzeugs verbunden. Indem die Wirkung der Gleiskonditioniereinheit verbessert wird, können Hilfsmedien, wie zum Beispiel Sand, Wasser oder Luft, eingespart werden. Mithin können Einrichtungen zur Erzeugung und Speicherung der Hilfsmedien kleiner dimensioniert werden und damit der Aufwand und die Kosten zur Erzielung eines verbesserten Kraftschlusses von Schienenfahrzeugrädern mit Schienen reduziert werden.

Alternativ kann die erfindungsgemäße Gleiskonditioniereinheit-Justageeinrichtung eine mechanische Übertragungseinrichtung aufweisen, welche eine Relativbewegung zwischen einem Wagenkasten und einem Drehgestell eines Schienenfahrzeugs in eine Stellbewegung zum Verstellen eines Wirkbereichs der Gleiskonditioniereinheit wandelt.

Zudem kann die erfindungsgemäße Gleiskonditioniereinheit-Justageeinrichtung eine Aktuatoreinheit zum Verstellen eines Wirkbereichs der Gleiskonditioniereinheit auf Basis der von der mechanischen Übertragungseinrichtung erzeugten Stellbewegung aufweisen.

Vorteilhaft kann bei diesen Varianten auf eine aufwändige Elektronik zur Justage der Gleiskonditioniereinheit verzichtet werden. Die Anordnung ist damit einfacher, robuster und weniger störanfällig.

Das erfindungsgemäße Schienenfahrzeug weist eine Gleiskonditioniereinheit und die erfindungsgemäße Gleiskonditioniereinheit-Justageeinrichtung zum Anpassen des Wirkbereichs der Gleiskonditioniereinheit an einen Querversatz der von dem Schienenfahrzeug befahrenen Schienen auf.

Das erfindungsgemäße Schienenfahrzeug teilt die Vorteile der erfindungsgemäßen Gleiskonditioniereinheit-Justageeinrichtung.

Bei dem erfindungsgemäßen Verfahren zum Justieren einer Gleiskonditioniereinheit wird ein Querversatz einer von dem Schienenfahrzeug befahrenen Schiene relativ zu einem Wirkbereich einer Gleiskonditioniereinheit des Schienenfahrzeugs ermittelt. Alternativ wird eine relative Position zwischen mindestens einem Drehgestell und einem Wagenkasten des Schienenfahrzeugs ermittelt.

Weiterhin wird ein Ansteuerbefehl zur Steuerung einer Ansteuereinheit in Abhängigkeit von dem ermittelten Querversatz oder der Relativposition von Drehgestell zu Wagenkasten und der Flächengröße des Wirkbereichs der Gleiskonditioniereinheit erzeugt und der erzeugte Ansteuerbefehl wird an die Ansteuereinheit übermittelt.

Auf Basis des Ansteuerbefehls wird ein Stellbefehl durch die Ansteuereinheit erzeugt und von der Ansteuereinheit an eine Aktuatoreinheit übermittelt. Schließlich wird ein Wirkbereich der Gleiskonditioniereinheit durch eine Stellbewegung der Aktuatoreinheit, welche auf Basis des Stellbefehls erfolgt, angepasst. Das erfindungsgemäße Verfahren zum Justieren einer Gleiskonditioniereinheit teilt die Vorteile der erfindungsgemäßen Gleiskonditioniereinheit-Justageeinrichtung.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung der erfindungsgemäßen Gleiskonditioniereinheit-Justageeinrichtung ist die Ermittlungseinheit dazu eingerichtet, den Ansteuerbefehl derart zu ermitteln, dass sich eine kraftschlussbeiwerterhöhende Wirkung einstellen kann. Die Größe des verbesserten Kraftschlussbeiwertes ist von der effektiven Fläche des Wirkbereichs bzw. der Größe des effektiven Wirkbereichs abhängig. Ein größerer effektiver Wirkbereich erlaubt zudem einen sparsameren Einsatz von Hilfsmedien, um einen verbesserten Kraftschlussbeiwert zu erreichen.

In einer Variante der erfindungsgemäßen Gleiskonditioniereinheit-Justageeinrichtung ist die Ermittlungseinheit dazu eingerichtet, den Ansteuerbefehl derart zu ermitteln, dass ein optimaler Wert einer kraftschlussbeiwerterhöhenden Wirkung erreicht wird. Eine optimale kraftschlussbeiwerterhöhende Wirkung wird bei einem maximalen effektiven Wirkbereich und einem optimalen Einsatz von Hilfsmedien erzielt. Vorteilhaft wird bei dieser Variante eine maximale Bremswirkung und ein optimales Traktionsverhalten eines Schienenfahrzeugs erreicht.

In einer Ausgestaltung der erfindungsgemäßen Gleiskonditioniereinheit-Justageeinrichtung ist die Ermittlungseinheit dazu eingerichtet, den Ansteuerbefehl derart zu ermitteln, dass ein vorbestimmter Mindestwert einer Größe einer Schnittfläche zwischen Wirkbereich und Gleisfläche, d.h. eines effektiven Wirkbereichs, erreicht wird. Wie bereits erwähnt, lässt sich bei vorgegebener Menge an eingesetzten Hilfsmedien ein verbesserter Kraftschlussbeiwert durch Verändern der Größe des effektiven Wirkbereichs erzielen.

In einer speziellen Variante der erfindungsgemäßen Gleiskonditioniereinheit-Justageeinrichtung ist die Ermittlungseinheit dazu eingerichtet, den Ansteuerbefehl derart zu ermitteln, dass eine maximale Schnittfläche zwischen dem Wirkbereich und der Gleisfläche erreicht wird. Wie bereits erwähnt, wird bei einem maximalen effektiven Wirkbereich und einer vorgegeben Menge an eingesetzten Hilfsmedien ein maximaler Kraftschlussbeiwert erreicht, was zu einem optimalen Bremsverhalten und einer maximalen Traktion des Schienenfahrzeugs beiträgt.

Die Aktuatoreinheit der erfindungsgemäßen Gleiskonditioniereinheit-Justageeinrichtung kann dazu eingerichtet sein, eine Position und/oder Orientierung der Gleiskonditioniereinheit zu verstellen, um den Wirkbereich der Gleiskonditioniereinheit zu justieren. Mit einer Änderung der Position und/oder der Orientierung der Gleiskonditioniereinheit wird auch eine Änderung der Position des Wirkbereichs der Gleiskonditioniereinheit erreicht. Auf diese Weise lässt sich die Fläche des effektiven Wirkbereichs vergrößern, wodurch bei konstanter Menge des eingesetzten Wirkmediums ein verbesserter Kraftschlussbeiwert eines Schienenfahrzeugs erreicht wird.

In einer Ausgestaltung der erfindungsgemäßen Gleiskonditioniereinheit-Justageeinrichtung weist die Messeinheit mindestens eine Sensoreinheit pro Schiene auf, welche dazu eingerichtet ist, Sensordaten von einer von dem Schienenfahrzeug befahrenen Schiene zu erfassen und den Querversatz zwischen Gleiskonditioniereinheit und Schiene auf Basis der Sensordaten zu ermitteln. Mit Hilfe der Sensoreinheit kann eine aktuelle Position und Fläche eines effektiven Wirkbereichs erfasst und überwacht werden. Üblicherweise weist ein Gleis zwei parallel zueinander liegende Schienen auf. Um individuelle Abweichungen bzw. Querversetzungen der beiden Schienen berücksichtigen zu können, wird bei dieser Variante mindestens eine Sensoreinheit pro Schiene eingesetzt.

Wie bereits erwähnt, gibt es alternativ zum direkten Verfahren noch das indirekte Verfahren. Dabei wird nicht direkt die Querverschiebung der Gleiskonditioniereinheit zur Schiene gemessen und als Ansteuerbefehl für die Ansteuereinheit genutzt, sondern die Stellung eines Drehgestells oder beider Drehgestelle relativ zum Wagenkasten mit Hilfe von Sensoreinheiten gemessen und damit indirekt die Stellung der Gleiskonditioniereinheit relativ zur Schiene ermittelt. Die folgenden Messprinzipien sind prinzipiell für beide Arten der Querversatzermittlung einsetzbar.

Die technische Funktion der eingesetzten Sensoreinheiten kann zum Beispiel auf einem der folgenden Messprinzipien basieren:
- optisch,
- induktiv,
- Ultraschall,
- kapazitiv.

Eine optische Sensoreinheit kann zum Beispiel Bilddaten erfassen, die mit Hilfe einer Bildauswertung interpretiert werden können. Induktive und kapazitive Sensoren können zum Beispiel als Abstandssensoren funktionieren, wobei die Tatsache genutzt werden kann, dass Schienen aus dem Werkstoff Eisenmetall hergestellt sind und daher elektrisch leitend sind. Mit Ultraschallwellen kann ebenfalls eine Art grobes Bild vom Schienenbereich erstellt werden.

Die Ermittlungseinheit der erfindungsgemäßen Gleiskonditioniereinheit-Justageeinrichtung kann eine Schaltlogik mit mindestens einem geeigneten Schaltschwellwert, welcher anzeigt, dass ein optimaler oder ein vorbestimmter Wirkbereich auf den Schienen nicht mehr erreicht wird, umfassen. Dabei basiert der Schaltschwellwert auf der geometrischen Anordnung der Gleiskonditioniereinheit und einer vorbestimmten Mindestgröße des Wirkbereichs.

In einer Variante der Gleiskonditioniereinheit-Justageeinrichtung ist der Aktuator dazu eingerichtet, die Wirkrichtung der Gleiskonditioniereinheit um eine Längsachse parallel zum Schienenverlauf zu drehen. Durch eine Drehung der Wirkrichtung der Gleiskonditioniereinheit kann die Position des Wirkbereichs an eine veränderte relative Gleisposition angepasst werden, um so die Fläche des effektiven Wirkbereichs zu vergrößern und den Kraftschlussbeiwert zwischen Schiene und Schienenfahrzeug zu erhöhen.

Der Aktuator kann auch als translatorischer Aktuator ausgebildet sein und dazu eingerichtet sein, den Wirkbereich der Gleiskonditioniereinheit in Querrichtung zur Fahrtrichtung zu verschieben. Vorteilhaft lässt sich auch mit dieser Methode die Position des Wirkbereichs an eine veränderte relative Gleisposition anpassen, um so die Fläche des effektiven Wirkbereichs zu vergrößern und den Kraftschlussbeiwert zwischen Schiene und Schienenfahrzeug zu erhöhen.

Auch eine Kombination der beiden vorstehenden Ausgestaltungen ist möglich. D.h., es kann auch eine translatorische und eine rotatorische Bewegung zur Justierung der Gleiskonditioniereinheit miteinander kombiniert werden.

Erfindungsgemäß ist der Aktuator dazu eingerichtet, den Wirkbereich der Gleiskonditioniereinheit-Justageeinrichtung zu verschieben, indem eine von mehreren in Querrichtung versetzten Austrittsöffnungen, deren Wirkbereich für den ermittelten Querversatz am geeignetsten ist, für Hilfsmedien geöffnet wird. Vorteilhaft lässt sich auch mit dieser Methode die Position des Wirkbereichs an eine veränderte relative Gleisposition anpassen, um so die Fläche des effektiven Wirkbereichs zu vergrößern und den Kraftschlussbeiwert zwischen Schiene und Schienenfahrzeug zu erhöhen.

Die Erfindung wird im Folgenden unter Hinweis auf die beigefügten Figuren anhand von Ausführungsbeispielen noch einmal näher erläutert. Es zeigen:
- FIG 1: eine Draufsicht auf ein Rad eines Schienenfahrzeugs und eine schematische Darstellung eines Querversatzes eines Wirkungsbereichs einer Gleiskonditioniereinheit,
- FIG 2: eine schematische Darstellung einer Gleiskonditionier-einheit-Justageeinrichtung ,
- FIG 3: eine schematische Darstellung einer Schienendetektion mit Hilfe von Sensoren,
- FIG 4: eine schematische Draufsicht auf eine schwenkbare Gleiskonditioniereinheit,
- FIG 5: eine schematische Draufsicht auf eine verschiebbare Gleiskonditioniereinheit,
- FIG 6: eine schematische Ansicht von vorne auf eine Gleiskonditioniereinheit mit einer Mehrzahl von schaltbaren Auslässen für Hilfsmedien,
- FIG 7: ein Flussdiagramm, welches ein Verfahren zum Justieren einer Gleiskonditioniereinheit,

- FIG 8: eine schematische Draufsicht auf ein Schienenfahrzeug,
- FIG 9: eine Gleiskonditioniereinheit-Justageeinrichtung mit einer mechanischen Übertragungseinrichtung.

In FIG 1 ist eine Draufsicht 10 auf ein Rad 11 eines Schienenfahrzeugs (nicht gezeigt) und eine schematische Darstellung eines Querversatzes QV eines Wirkungsbereichs einer Gleiskonditioniereinheit dargestellt.

In Rollrichtung des Rads 11 sind zum Vergleich eine durchgezogene Linie einer tatsächlichen Richtung des Rads 11, welches tangential zu dem Bogen eines Gleises, auf dem das Rad 11 rollt, ausgerichtet ist, und eine gestrichelte Linie eines bogenförmigen Gleisverlaufs mit einem gewünschten Wirkbereich 13 eingezeichnet. Damit liegt der tatsächliche Wirkbereich 12 der Gleiskonditioniereinheit auf der durchgezogenen Linie und trifft nicht mehr das bogenförmige Gleis sowie den gewünschten Wirkbereich 13, so dass kein Effekt mehr hinsichtlich einer kraftschlussbeiwerterhöhenden Wirkung besteht. Der Abstand QV in Querrichtung zwischen dem tatsächlichen Wirkbereich 12 und dem Gleisbogen bzw. dem auf dem Gleisbogen befindlichen gewünschten Wirkbereich 13 wird als Querversatz QV bezeichnet.

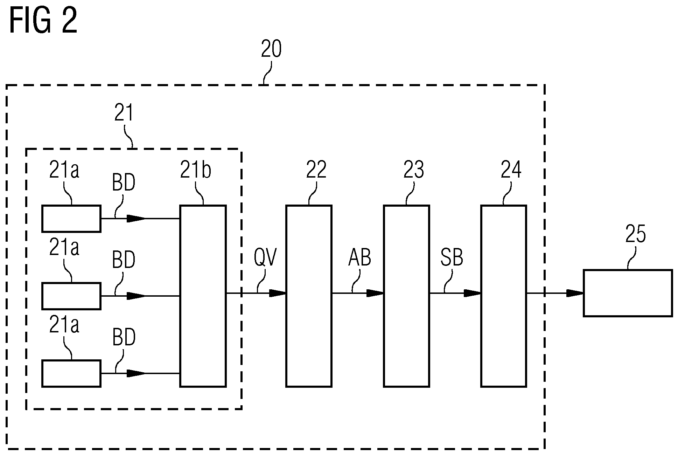

In FIG 2 ist eine schematische Darstellung einer Gleiskonditioniereinheit-Justageeinrichtung 20 gezeigt. Die Gleiskonditioniereinheit-Justageeinrichtung 20 umfasst eine Messeinheit 21. Die Messeinheit 21 umfasst drei Sensoreinheiten 21a, welche in diesem konkreten Ausführungsbeispiel optische Kameras umfassen, mit denen Bilddaten BD von einem abzufahrenden Schienenbereich vor einem Schienenfahrzeug, an dem die Gleiskonditioniereinheit-Justageeinrichtung 20 angeordnet ist, aufgenommen werden. Die Bilddaten BD werden in einer Schienendetektionseinheit 21b, die ebenfalls Teil der Messeinheit 21 ist, hinsichtlich der Position der Schienen im Bild relativ zu einer vorbestimmten Position eines Wirkungsbereichs ausgewertet. Aus diesen Positionen wird ein Querversatz QV zwischen dem Wirkungsbereich und einer durch die Kameras 21a ermittelten Schienenposition ermittelt. Die Information über den Querversatz QV wird an eine Ermittlungseinheit 22 übermittelt, welche auf Basis des Querversatzes QV und der bekannten Flächengröße des Wirkbereichs der Gleiskonditioniereinheit ermittelt, ob eine Korrektur der Position und/oder Ausrichtung der Gleiskonditioniereinheit 25 nötig ist, um eine ausreichende Verbesserung des Kraftschlussbeiwerts zu erzielen. Für den Fall, dass eine Korrektur notwendig ist, ermittelt die Ermittlungseinheit 22 auf der Basis einer berechneten Korrektur einen Ansteuerbefehl AB, der an eine Ansteuereinheit 23 übermittelt wird. Die Ansteuereinheit 23 steuert mit Hilfe eines Stellbefehls SB, der auf dem empfangenen Ansteuerbefehl AB basiert, eine Aktuatoreinheit 24, die ebenfalls Teil der Gleiskonditioniereinheit-Justageeinrichtung 20 ist. Die Aktuatoreinheit 24 führt den Stellbefehl SB aus und verstellt eine Position und/oder Orientierung einer von der Aktuatoreinheit 24 angesteuerten Gleiskonditioniereinheit 25, um deren Wirkbereich an einen aktuellen Querversatz zwischen Schiene und bisherigem Wirkbereich anzupassen.

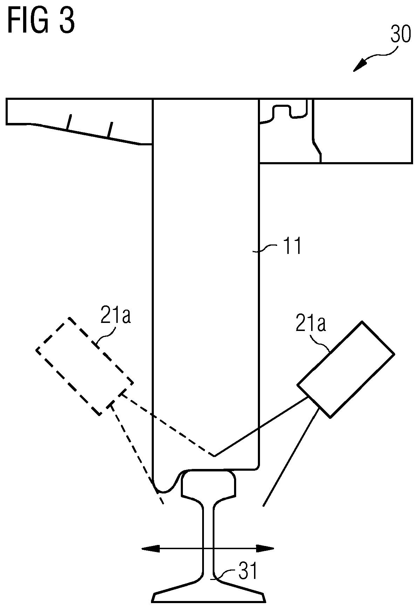

In FIG 3 ist eine Querschnittsansicht 30 gezeigt, in der die Detektion einer Schienenposition mit Hilfe einer Kamera 21a (mit durchgezogenen Strichen auf der rechten Seite gezeichnet) veranschaulicht ist. Die Kamera 21a kann sowohl auf der rechten Seite vor einem Rad 11 eines Schienenfahrzeugs montiert sein als auch auf der linken Seite vor dem Rad 11 des Schienenfahrzeugs montiert sein (gestrichelt eingezeichnet). Die Kamera 21a nimmt Bilddaten von einer von dem Schienenfahrzeug befahrenen Schiene 31 auf. Eine Auswertung der erfassten Bilddaten sowie die Kenntnis der Höhendistanz zwischen Kamera 21a und Schiene ermöglicht eine genaue Positionsbestimmung der Schiene 31 und damit eine Ermittlung eines Querversatzes in Pfeilrichtung. Die Ermittlung des Querversatzes erfolgt permanent durch ständige Bildaufnahmen und Auswertungen.

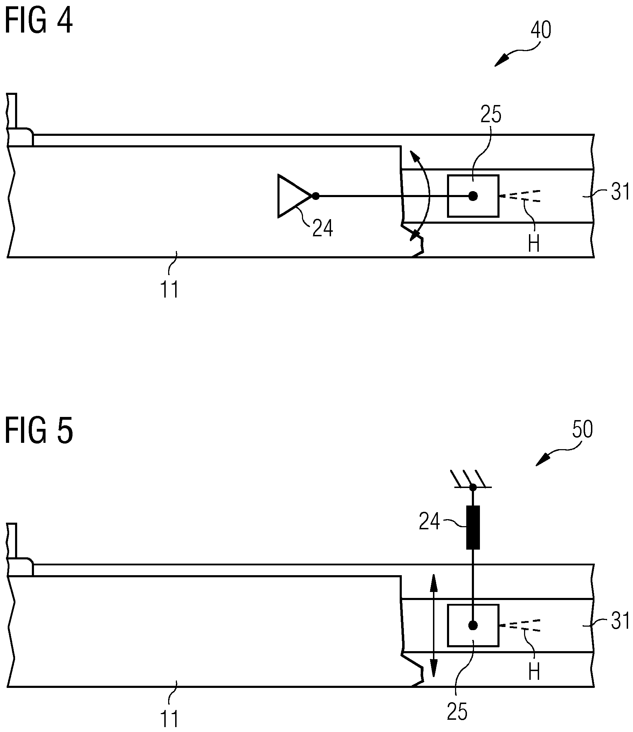

In FIG 4 ist eine Draufsicht 40 auf eine schwenkbare Gleiskonditioniereinheit 25 gezeigt. Die Gleiskonditioniereinheit 25 ist an einem Schienenfahrzeug (nicht gezeigt) vor einem Rad 11 des Schienenfahrzeugs montiert. Die Gleiskonditioniereinheit 25 ist mit einer Aktuatoreinheit 24 mechanisch verbunden und lässt sich von der Aktuatoreinheit 24 um eine in Längsrichtung des Schienenfahrzeugs verlaufende Längsachse schwenken. Damit lässt sich ein Versatz in Querrichtung zwischen den Schienen und der Gleiskonditioniereinheit 25 kompensieren. Anstatt vertikal ist die Wirkrichtung leicht diagonal, so dass der Wirkbereich der Gleiskonditioniereinheit 25 auch bei einem Querversatz zwischen der Gleiskonditioniereinheit 25 und der Schiene 31 weiterhin auf der Oberseite der Schiene 31 liegt. In dem in FIG 4 gezeigten Ausführungsbeispiel wird ein Hilfsmedium H oder eine Kombination verschiedener Hilfsmedien H, beispielsweise Sand, Wasser oder Luft, von der justierten Gleiskonditioniereinheit 25 auf der Schiene 31 platziert.

In FIG 5 ist eine schematische Draufsicht 50 auf eine verschiebbare Gleiskonditioniereinheit 25 gezeigt. Anders als in FIG 4 ist die Gleiskonditioniereinheit 25 nicht schwenkbar, sondern ihre Position in Querrichtung ist verschiebbar. Hierfür wird sie von einem seitlich positionierten Aktuator 24 in Querrichtung, d.h. in Pfeilrichtung verschoben, um einen Versatz zwischen der Gleiskonditioniereinheit 25 und dem Gleis 31 auszugleichen. Auch in dem in FIG 5 gezeigten Ausführungsbeispiel wird ein Hilfsmittel H von der Gleiskonditioniereinheit 25 auf einer Schiene 31 vor einem Rad 11 eines Schienenfahrzeugs (nicht gezeigt) appliziert.

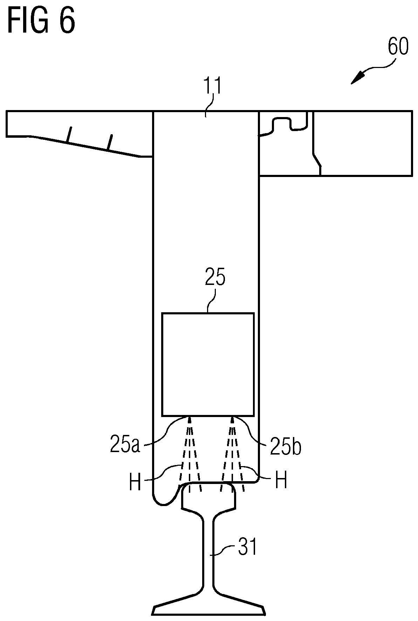

In FIG 6 ist eine Ansicht 60 von vorne auf eine Gleiskonditioniereinheit 25 gezeigt. Die Gleiskonditioniereinheit 25 ist vor einem Rad 11 eines Schienenfahrzeugs positioniert und weist eine Mehrzahl von schaltbaren Auslässen 25a, 25b für Hilfsmedien H, beispielsweise Sand, Wasser oder Luft, auf. Die Gleiskonditioniereinheit 25 ist vor einem Rad 11 eines Schienenfahrzeugs positioniert. Weist nun die Schiene 31, auf der das Schienenfahrzeug rollt, von vorne, d.h. aus der gezeigten Perspektive betrachtet, einen Versatz gegenüber der Gleiskonditioniereinheit 25 nach links auf, so wird der linke Auslass 25a geöffnet und der rechte Auslass 25b geschlossen. Der linke Auslass 25a befindet sich dann ungefähr vertikal über der querversetzten Schiene 31. Weist die Schiene 31 dagegen einen Versatz gegenüber der Gleiskonditioniereinheit 25 nach rechts auf, so wird der rechte Auslass 25b geöffnet und der linke Auslass 25a geschlossen. Liegt kein Versatz vor, so kann gegebenenfalls ein beliebiger Auslass 25a, 25b oder es können beide Auslässe 25a, 25b geöffnet werden.

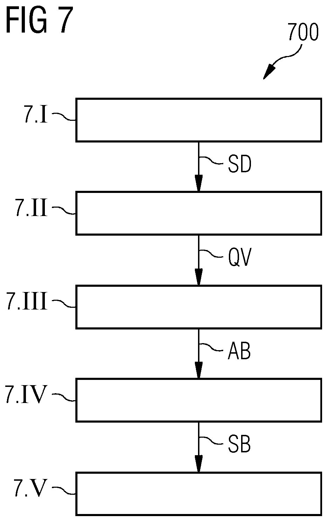

In FIG 7 ist ein Flussdiagramm gezeigt, welches ein Verfahren zum Justieren einer Gleiskonditioniereinheit eines Schienenfahrzeugs veranschaulicht. Bei dem Schritt 7.I werden zunächst Sensordaten SD mit Hilfe von Sensoreinheiten kontinuierlich erfasst. Anhand der Sensordaten SD wird bei dem Schritt 7.II ein Querversatz QV einer von dem Schienenfahrzeug befahrenen Schiene relativ zu einem Wirkbereich einer Gleiskonditioniereinheit des Schienenfahrzeugs ermittelt. Die Ermittlung des Querversatzes kann sowohl direkt, d.h. durch eine Messung einer Position der Schiene mit Hilfe von Sensoreinheiten erfolgen, als auch indirekt über die Ermittlung einer Relativstellung zwischen Wagenkasten und Drehgestell mit Hilfe von Sensoren erfolgen. Anhand des Querversatzes QV oder alternativ in Abhängigkeit von der relativen Position zwischen einem Drehgestell und einem Wagenkasten wird weiterhin bei dem Schritt 7.111 ein Ansteuerbefehl AB für eine Ansteuereinheit ermittelt. Auf Basis des Ansteuerbefehls AB wird bei dem Schritt 7.IV durch die Ansteuereinheit ein Stellbefehl SB erzeugt, mit dem eine Bewegung eines Aktuators gesteuert wird. Bei dem Schritt 7.V bewegt der Aktuator die Gleiskonditioniereinheit gemäß dem erhaltenen Stellbefehl SB in eine Position, welche derart gewählt wird, dass der Wirkbereich der Gleiskonditioniereinheit mit der Position einer Schiene bzw. deren Lauffläche übereinstimmt.

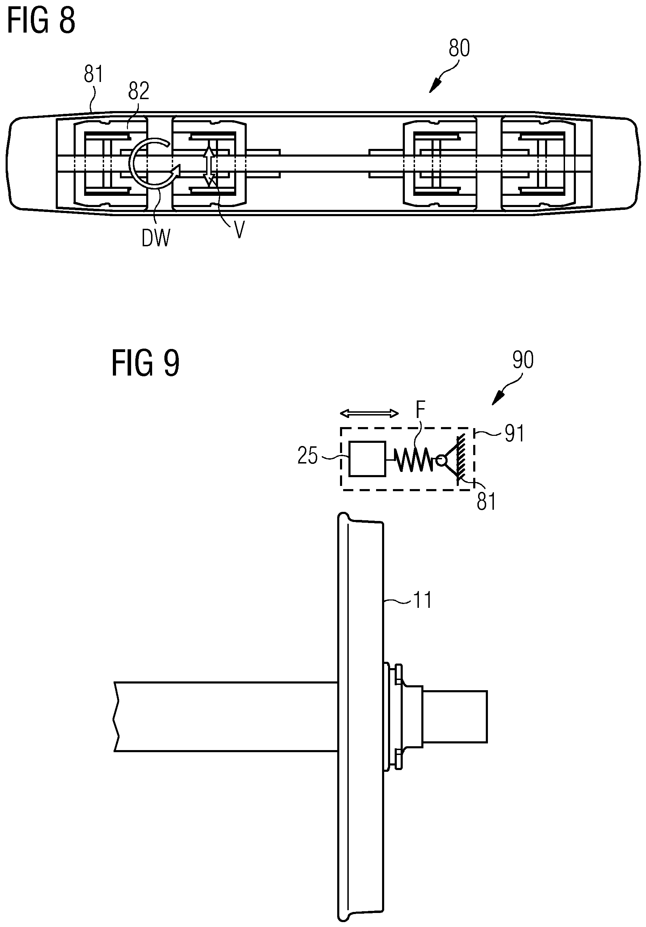

FIG 8 zeigt eine schematische Draufsicht 80 auf ein Schienenfahrzeug. Das Schienenfahrzeug weist einen Wagenkasten 81 auf, an dem zwei Drehgestelle 82 montiert sind. Fährt das Schienenfahrzeug in eine Kurve, so ergibt sich eine Drehung der Drehgestelle 82 mit einem charakteristischen Drehwinkel DW (angedeutet durch einen in der Umfangsrichtung eines Kreises verlaufenden Pfeil) relativ zu dem Wagenkasten 81. Ebenso ergibt sich dabei ein Querversatz V (durch einen Pfeil in Querrichtung symbolisiert) der Räder des Drehgestells relativ zu dem Wagenkasten 81. Der Drehwinkel DW oder der Querversatz V der Räder des Drehgestells 82 lassen sich zum Beispiel mit Hilfe von Sensoren erfassen. Bei Kenntnis mindestens eines dieser beiden Werte DW, V lässt sich der Querversatz QV zwischen einer von dem Schienenfahrzeug befahrenen Schiene relativ zu einem Wirkbereich einer Gleiskonditioniereinheit des Schienenfahrzeugs berechnen.

In FIG 9 ist eine Draufsicht 90 auf eine Gleiskonditioniereinheit-Justageeinrichtung 91 mit einer mechanischen Übertragungseinrichtung F gemäß einem Ausführungsbeispiel der Erfindung veranschaulicht. Mit Hilfe der mechanischen Übertragungseinrichtung F, welche in FIG 9 als Federelement dargestellt ist, wird die Auslenkung des Wagenkastens relativ zum Drehgestell als mechanische Wegsteuergröße für eine Zwangsnachführung einer Gleiskonditioniereinheit 25 genutzt. Bei dem in FIG 9 gezeigten Ausführungsbeispiel ist die Gleiskonditioniereinheit 25 am Drehgestell befestigt und die mechanische Übertragungseinrichtung F am Wagenkasten 81 befestigt. Alternativ (nicht gezeigt) kann die Gleiskonditioniereinheit auch am Wagenkasten befestigt sein, dann wird für die mechanische Übertragungseinrichtung ein Befestigungspunkt am Drehgestell gewählt. Der Mechanismus der mechanischen Übertragungseinrichtung kann beispielsweise Hebel, Federn, Gelenke oder eine Kombination aus den genannten Elementen umfassen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Gleiskonditioniereinheit-Justageeinrichtung (20), aufweisend:
- mindestens eine Messeinheit (21)
- zum Ermitteln eines Querversatzes (QV) einer von einem Schienenfahrzeug befahrenen Schiene (11) relativ zu einem Wirkbereich (12) einer Gleiskonditioniereinheit (25) des Schienenfahrzeugs oder
- zur Ermittlung einer relativen Position eines Drehgestells und des Wagenkastens des Schienenfahrzeugs,
- eine Ermittlungseinheit (22) zum Ermitteln eines Ansteuerbefehls (AB) für eine Ansteuereinheit (23) in Abhängigkeit von
- dem ermittelten Querversatz (QV) zwischen dem Wirkbereich der Gleiskonditioniereinheit und der Schiene oder
- alternativ in Abhängigkeit von der relativen Position des Drehgestells zu dem Wagenkasten des Schienenfahrzeugs,
- die Ansteuereinheit (23) zum Ansteuern einer Aktuatoreinheit (24) der Gleiskonditioniereinheit (25) auf Basis des Ansteuerbefehls (AB) mit einem Stellbefehl (SB),
- die Aktuatoreinheit (24) zum Verstellen eines Wirkbereichs (12) der Gleiskonditioniereinheit (25) auf Basis des Stellbefehls (SB),
**dadurch gekennzeichnet, dass**
die Aktuatoreinheit (24) dazu eingerichtet ist, den Wirkbereich (12) der Gleiskonditioniereinheit-Justageeinrichtung (20) zu verschieben, in dem eine von mehreren in Querrichtung versetzten Austrittsöffnungen (25a, 25b) für Hilfsmedien (H), deren Wirkbereich für den ermittelten Querversatz (QV) am geeignetsten ist, geöffnet wird.

2. Gleiskonditioniereinheit-Justageeinrichtung nach Anspruch 1, wobei die Ermittlungseinheit (22) dazu eingerichtet ist, den Ansteuerbefehl (AB) derart zu ermitteln, dass ein verbesserter Wert einer kraftschlussbeiwerterhöhenden Wirkung erreicht wird.

3. Gleiskonditioniereinheit-Justageeinrichtung nach Anspruch 1 oder 2, wobei die Ermittlungseinheit (22) dazu eingerichtet ist, den Ansteuerbefehl (AB) derart zu ermitteln, dass ein optimaler Wert einer kraftschlussbeiwerterhöhenden Wirkung erreicht wird.

4. Gleiskonditioniereinheit-Justageeinrichtung nach Anspruch 1 oder 2, wobei die Ermittlungseinheit (22) dazu eingerichtet ist, den Ansteuerbefehl (AB) derart zu ermitteln, dass ein vorbestimmter Mindestwert einer Größe einer Schnittfläche zwischen Wirkbereich (12) und Gleisfläche erreicht wird.

5. Gleiskonditioniereinheit-Justageeinrichtung nach Anspruch 4, wobei die Ermittlungseinheit (22) dazu eingerichtet ist, den Ansteuerbefehl (AB) derart zu ermitteln, dass eine maximale Schnittfläche zwischen dem Wirkbereich (12) und der Gleisfläche erreicht wird.

6. Gleiskonditioniereinheit-Justageeinrichtung nach einem der vorstehenden Ansprüche, wobei die Messeinheit (21)
- mindestens eine Sensoreinheit (21a), welche dazu eingerichtet ist, Sensordaten (SD, BD) von einer von dem Schienenfahrzeug befahrenen Schiene (31) zu erfassen und den Querversatz (QV) auf Basis der Sensordaten (SD, BD) zu ermitteln, oder
- alternativ mindestens eine Sensoreinheit zur Ermittlung einer relativen Position eines Drehgestells zu dem Wagenkasten des Schienenfahrzeugs aufweist.

7. Gleiskonditioniereinheit-Justageeinrichtung nach Anspruch 6, wobei die technische Funktion der Sensoreinheit (21a) auf einem der folgenden Messprinzipien basiert:
- optisch,
- induktiv,
- Ultraschall,
- kapazitiv.

8. Gleiskonditioniereinheit-Justageeinrichtung nach einem der vorstehenden Ansprüche, wobei die Ermittlungseinheit (22) eine Schaltlogik mit mindestens einem geeigneten Schaltschwellwert (SW), welcher anzeigt, dass ein optimaler Wirkbereich (13) auf den Schienen (31) verlassen wird, umfasst, wobei der Schaltschwellwert (SW) auf der geometrischen Anordnung der Gleiskonditioniereinheit (25) und einer Mindestgröße eines effektiven Wirkbereichs (13) basiert.

9. Gleiskonditioniereinheit-Justageeinrichtung nach einem der vorhergehenden Ansprüche, aufweisend eine mechanische Übertragungseinrichtung (F), welche dazu eingerichtet ist, eine Relativbewegung zwischen dem Wagenkasten (81) und einem Drehgestell (82) eines Schienenfahrzeugs in eine Stellbewegung zum Verstellen des Wirkbereichs (12) der Gleiskonditioniereinheit (25) zu wandeln.

10. Schienenfahrzeug, aufweisend:
- eine Gleiskonditioniereinheit (25),
- eine Gleiskonditioniereinheit-Justageeinrichtung (20) nach einem der vorstehenden Ansprüche zum Anpassen des Wirkbereichs der Gleiskonditioniereinheit (25) an einen Querversatz (QV) der von dem Schienenfahrzeug befahrenen Schienen (31) .

11. Verfahren zum Justieren einer Gleiskonditioniereinheit eines Schienenfahrzeugs, aufweisend die Schritte:
- Ermitteln eines Querversatzes (QV) einer von dem Schienenfahrzeug befahrenen Schiene (31) relativ zu einem Wirkbereich der Gleiskonditioniereinheit (25) des Schienenfahrzeugs oder alternativ Ermitteln der relativen Position eines Drehgestells (82) zu dem Wagenkasten (81) des Schienenfahrzeugs,
- Ermitteln eines Ansteuerbefehls (AB) für eine Ansteuereinheit (23) in Abhängigkeit von dem ermittelten Querversatz (QV) oder der Relativposition von Drehgestell (82) zu Wagenkasten (81),
- Übermitteln des Ansteuerbefehls (AB) an eine Ansteuereinheit (23),
- Erzeugen eines Stellbefehls (SB) auf Basis des Ansteuerbefehls (AB) durch die Ansteuereinheit (23) und Übermitteln des Stellbefehls (SB) von der Ansteuereinheit (23) an eine Aktuatoreinheit (25),
- Verstellen eines Wirkbereichs der Gleiskonditioniereinheit (25) durch die Aktuatoreinheit (24) auf Basis des Stellbefehls (SB),
**gekennzeichnet durch** 11
- Verschiebung des Wirkbereichs (12) der Gleiskonditioniereinheit-Justageeinrichtung (20) durch die Aktuatoreinheit (24), in dem eine von mehreren in Querrichtung versetzten Austrittsöffnungen (25a, 25b) für Hilfsmedien (H), deren Wirkbereich für den ermittelten Querversatz (QV) am geeignetsten ist, geöffnet wird.

## Claims

1. Adjustment installation (20) for a track conditioning unit having:
- at least one measuring unit (21)
- for determining a relative transverse offset (QV) of a rail (11) traveled by a rail vehicle in relation to an effective range (12) of a track conditioning unit (25) of the rail vehicle; or
- for determining a relative position of a bogie and of the car body of the rail vehicle;
- a detection unit (22) for determining an actuation command (AB) for an actuation unit (23) as a function of
- the determined transverse offset (QV) between the effective range of the track conditioning unit and the rail; or
- alternatively as a function of the relative position of the bogie in relation to the car body of the rail vehicle;
- the actuation unit (23) for actuating an actuator unit (24) of the track conditioning unit (25) using an adjustment command (SB) based on the actuation command (AB) ;
- the actuator unit (24) for adjusting an effective range (12) of the track conditioning unit (25) based on the adjustment command (SB);
**characterized in that** the actuator unit (24) is specified for displacing the effective range (12) of the adjustment installation (20) for a track conditioning unit **in that** one of a plurality of transversely offset exit openings (25a, 25b) for auxiliary media (H) is opened, the effective range of said exit opening being the most suitable for the determined transverse offset (QV).

2. Adjustment installation for a track conditioning unit according to Claim 1, wherein the detection unit (22) is specified for determining the actuation command (AB) in such a manner that an improved value of an effect increasing the coefficient of adhesion is achieved.

3. Adjustment installation for a track conditioning unit according to Claim 1 or 2, wherein the detection unit (22) is specified for determining the actuation command (AB) in such a manner that an optimal value of an effect increasing the coefficient of adhesion is achieved.

4. Adjustment installation for a track conditioning unit according to Claim 1 or 2, wherein the detection unit (22) is specified for determining the actuation command (AB) in such a manner that a predetermined minimum value of a size of an interface between the effective range (12) and the rail face is achieved.

5. Adjustment installation for a track conditioning unit according to Claim 4, wherein the detection unit (22) is specified for determining the actuation command (AB) in such a manner that a maximum interface between the effective range (12) and the rail face is achieved.

6. Adjustment installation for a track conditioning unit according to one of the preceding claims, wherein the measuring unit (21) has
- at least one sensor unit (21a) which is specified for recording sensor data (SD, BD) of a rail (31) traveled by the rail vehicle and for determining the transverse offset (QV) based on the sensor data (SD, BD); or
- alternatively has at least one sensor unit for determining a relative position of a bogie in relation to the car body of the rail vehicle.

7. Adjustment installation for a track conditioning unit according to Claim 6, wherein the technical function of the sensor unit (21a) is based on one of the following principles of measurement:
- optical;
- inductive;
- ultrasonic;
- capacitive.

8. Adjustment installation for a track conditioning unit according to one of the preceding claims, wherein the detection unit (22) comprises a switching logic having at least one suitable switching threshold value (SW) which indicates a departure from an optimal effective range (13) on the rails (31), wherein the switching threshold value (SW) is based on the geometric arrangement of the track conditioning unit (25) and on a minimum size of an active effective range (13) .

9. Adjustment installation for a track conditioning unit according to one of the preceding claims, having a mechanical transmission installation (F) which is specified for converting a relative movement between the car body (81) and a bogie (82) of a rail vehicle to an adjusting movement for adjusting the effective range (12) of the track conditioning unit (25) .

10. Rail vehicle having:
- a track conditioning unit (25);
- an adjustment installation (20) for a track conditioning unit according to one of the preceding claims for adapting the effective range of the track conditioning unit (25) to a transverse offset (QV) of the rails (31) traveled by the rail vehicle.

11. Method for adjusting a track conditioning unit of a rail vehicle, comprising the following steps:
- determining a relative transverse offset (QV) of a rail (31) traveled by the rail vehicle in relation to an effective range of the track conditioning unit (25) of the rail vehicle; or alternatively determining the relative position of a bogie (82) in relation to the car body (81) of the rail vehicle;
- determining an actuation command (AB) for an actuation unit (23) as a function of the determined transverse offset (QV) or the relative position of the bogie (82) in relation to the car body (81);
- transmitting the actuation command (AB) to an actuation unit (23);
- generating an adjustment command (SB) based on the actuation command (AB) by the actuation unit (23), and transmitting the adjustment command (SB) from the actuation unit (23) to an actuator unit (25);
- adjusting an effective range of the track conditioning unit (25) by the actuator unit (24) based on the adjustment command (SB);
**characterized by**
- displacing the effective range (12) of the adjustment installation (20) for a track conditioning unit by the actuator unit (24) in that one of a plurality of transversely offset exit openings (25a, 25b) for auxiliary media (H) is opened, the effective range of said exit opening being the most suitable for the determined transverse offset (QV).

## Revendications

1. Dispositif de réglage d'une unité de conditionnement de rails (20), comportant :
- au moins une unité de mesure (21)
- pour détecter un décalage transversal (QV) d'un rail (11) sur lequel circule un véhicule ferroviaire (11) par rapport à une zone effective (12) d'une unité de conditionnement de rails (25) du véhicule ferroviaire ou
- pour détecter une position relative d'un bogie par rapport à la caisse du véhicule ferroviaire,
- une unité de détection (22) pour détecter un ordre d'excitation (AB) pour une unité d'excitation (23) en fonction
- du décalage transversal (QV) entre la zone effective de l'unité de conditionnement de rails et le rail ou,
- en alternative, de la position relative du bogie par rapport à la caisse du véhicule ferroviaire,
- l'unité d'excitation (23) destinée à exciter une unité d'actionnement (24) de l'unité de conditionnement de rails (25) sur la base de l'ordre d'excitation (AB) par un ordre de réglage (SB)
- l'unité d'actionnement (24) pour régler une zone effective (12) de l'unité de conditionnement de rails (25) sur la base de l'ordre de réglage (SB),
**caractérisé en ce que**
l'unité d'actionnement (24) est conçue pour déplacer la zone effective (12) du dispositif de réglage de l'unité de conditionnement de rails (20) en ouvrant une ouverture de sortie (25a, 25b) choisie parmi plusieurs ouvertures de sortie décalées en direction transversale à des fluides auxiliaires (H) dont la zone effective est la plus apte pour le décalage transversal (QV) détecté.

2. Dispositif de réglage d'une unité de conditionnement de rails selon la revendication 1, dans lequel l'unité de détection (22) est conçue pour détecter l'ordre d'excitation (AB) de manière à ce qu'une valeur améliorée d'un effet apte à augmenter le coefficient d'adhérence soit obtenue.

3. Dispositif de réglage d'une unité de conditionnement de rails selon la revendication 1 ou 2, dans lequel l'unité de détection (22) est conçue pour détecter l'ordre d'excitation (AB) de manière à ce qu'une valeur optimale d'un effet apte à augmenter le coefficient d'adhérence soit obtenue.

4. Dispositif de réglage d'une unité de conditionnement de rails selon la revendication 1 ou 2, dans lequel l'unité de détection (22) est conçue pour détecter l'ordre d'excitation (AB) de manière à ce qu'une valeur minimum prédéterminée des dimensions d'une intersection entre la zone effective (12) et la surface de rail soit obtenue.

5. Dispositif de réglage d'une unité de conditionnement de rails selon la revendication 4, dans lequel l'unité de détection (22) est conçue pour détecter l'ordre d'excitation (AB) de manière à ce qu'une intersection maximale entre la zone effective (12) et la surface de rail soit obtenue.

6. Dispositif de réglage d'une unité de conditionnement de rails selon l'une des revendications précédentes, dans lequel l'unité de mesure (21) comporte
- au moins une unité à capteurs (21a) conçue pour capter des données des capteurs (SD, BD) d'un rail (31) sur lequel circule le véhicule ferroviaire et détecter le décalage transversal (QV) sur la base des données des capteurs (SD, BD), ou,
- en alternative, comporte au moins une unité de captage pour détecter une position relative d'un bogie par rapport à la caisse du véhicule ferroviaire.

7. Dispositif de réglage d'une unité de conditionnement de rails selon la revendication 6, dans lequel la fonction technique de l'unité à capteurs (21a) est basée sur un des principes de mesure suivants :
- optique,
- inductif,
- ultrasons,
- capacitif.

8. Dispositif de réglage d'une unité de conditionnement de rails selon l'une des revendications précédentes, dans lequel l'unité de détection (22) comporte une logique de commande comprenant au moins un seuil de commande (SW) approprié qui indique qu'une zone effective (13) sur les rails (31) est quittée, le seuil de commande (SW) étant basé sur l'agencement géométrique de l'unité de conditionnement de rails (25) et une taille minimum d'une zone effective (13).

9. Dispositif de réglage d'une unité de conditionnement de rails selon l'une des revendications précédentes, comportant un dispositif de transmission mécanique (F) conçu pour convertir un mouvement relatif entre la caisse de véhicule (81) et un bogie (82) d'un véhicule ferroviaire en un mouvement de réglage pour adapter la zone effective (12) de l'unité de conditionnement de rails (25).

10. Véhicule ferroviaire comportant :
- une unité de conditionnement de rails (25),
- un dispositif de réglage d'une unité de conditionnement de rails (20) selon l'une des revendications précédentes pour adapter la zone effective de l'unité de conditionnement de rails (25) à un décalage transversal (QV) des rails (31) sur lesquels circule le véhicule ferroviaire.

11. Procédé de réglage d'une unité de conditionnement de rails d'un véhicule ferroviaire, comportant les étapes suivantes :
- détection d'un décalage transversal (QV) d'un rail (31) sur lequel circule un véhicule ferroviaire par rapport à une zone effective de l'unité de conditionnement de rails (25) du véhicule ferroviaire ou, en alternative, détection de la position relative d'un bogie (82) par rapport à la caisse du véhicule ferroviaire,
- détection d'un ordre d'excitation (AB) pour une unité d'excitation (23) en fonction du décalage transversal (QV) détecté ou de la position relative du bogie (82) par rapport à la caisse de véhicule (81),
- transmission d'un ordre d'excitation (7KB) à une unité d'excitation (23),
- génération d'un ordre de réglage (SB) sur la base de l'ordre d'excitation (AB) par l'unité d'excitation (23) et transmission de l'ordre de réglage (SB) de l'unité d'excitation (23) à une unité d'actionnement (25),
- adaptation d'une zone effective de l'unité de conditionnement de rails (25) par l'unité d'actionnement (24) sur la base de l'ordre de réglage (SB),
**caractérisé par**
- un décalage de la zone effective (12) du dispositif de réglage de l'unité de conditionnement de rails (20) par l'unité d'actionnement (24) en ouvrant une ouverture de sortie (25a, 25b) choisie parmi plusieurs ouvertures de sortie décalées en direction transversale à des fluides auxiliaires (H) dont la zone effective est la plus apte pour le décalage transversal (QV) détecté.
